(19) Europäisches Patentamt
European Patent Office
Office européen des brevets

(11) EP 2 160 028 A2

(12) EUROPEAN PATENT APPLICATION

(43) Date of publication:
03.03.2010 Bulletin 2010/09

(51) Int Cl.:
*H04N 7/16* (2006.01)

(21) Application number: 08253387.8

(22) Date of filing: 20.10.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 02.09.2008 US 202550

(71) Applicant: Industrial Technology Research Institute
Hsinchu 31040 (TW)

(72) Inventors:
• Kao, Yih-Sien
Chutung, Hsinchu 31040 (TW)

• Leu, Muh-Chyi
Chutung, Hsinchu 31040 (TW)
• Sun, Hung-Min
Chutung, Hsinchu 31040 (TW)
• Wang, King-Hang
Chutung, Hsinchu 31040 (TW)

(74) Representative: Roberts, Mark Peter
J.A. Kemp & Co.
14 South Square
Gray's Inn
London WC1R 5JJ (GB)

(54) **A DRM key management system using multi-dimensional grouping techniques**

(57)    A key management system is provided. The key management system includes a key server. The key server generates secret keys by constructing a rights hierarchy and a resource hierarchy, associating the rights hierarchy with the resource hierarchy, and converting a rights-resource relationship into a node in a service hierarchy. The rights hierarchy includes a rights node and the resource hierarchy includes a resource node. The rights hierarchy is set above the resource hierarchy. The right hierarchy and the resource hierarchy are in a partial order relationship.

FIG. 1

**Description**

Field of the Invention

This invention in general relates to a key management system and methods for managing the key management system. More specifically, this invention relates to a digital rights key management system and methods for managing the system.

Background

Modem network technology has made possible the distribution of digital information throughout the world. Applications like pay-TV, multicast communication, and distribution of copyrighted music and videos are emerging for the distribution of digital information. One digital information distribution scheme is transmitting data from a head-end device to a large group of receiving devices. The head-end device usually encrypts digital information before delivering it. The receiving devices decrypt the digital information using secret keys.

Head-end devices control the information distribution system so that a chargeable business model can be built. An example of the information distribution system is a pay-TV service. The information to be distributed, or resources, of a pay-TV system are program channels. In a pay-TV system or other security control systems, users are divided into classes with each of them being assigned different types and levels of authority to use the resources. The resources are usually divided into categories or packages that can only be accessed or used by certain classes of users. Since each class might involve many users whose authority changes over the time and since the categories of resources will be updated according to the actual availability of resources during different time frames, an efficient key management system is needed to streamline the operation by taking these factors into consideration.

In a head-end resource management system, all resources may be encrypted before being delivered to the subscribers for the purpose of protecting content. Pay-TV subscribers who subscribe to certain program channels have to obtain service keys in order to decrypt the program channels he is entitled to view, store, or copy, for example. The pay-TV system assigns a user device key to each subscriber's device and encrypts program channels with the assigned user device key. In addition, to control the use of each program channel, each channel may be encrypted by a separate key. As a consequence, the system must deliver to each individual subscriber the content encryption keys which are encrypted by using each subscriber's user device key. The content encryption keys can only be decrypted by the designated user devices with its device key, and not by others. In such a scheme, the amount of overhead information is proportional to the number of subscribers and proportional to the number of resources and may be too much for a head-end device to handle. Therefore, the whole system may suffer from being too slow. In addition, in order to improve response time, overhead information may need to be repetitively delivered to a subscriber. This further aggregates the communication overhead and degrades service quality.

**SUMMARY**

The features of the invention are defined in the claims. However, where a claim contains multiple features, it must be understood that any one of those features may be applied independently of the others. Accordingly, no assumption is to be drawn that the claims define strict combinations of features that must be grouped together for technical reasons.

Consistent with embodiments of the present invention, a key management system is provided. The key management system includes a key server. The key server generates secret keys by constructing a rights hierarchy and a resource hierarchy, associating the rights hierarchy with the resource hierarchy, and converting a rights-resource relationship into a node in a service hierarchy. The rights hierarchy includes a rights node and the resource hierarchy includes a resource node. The rights hierarchy is set above the resource hierarchy. The right hierarchy and the resource hierarchy are in a partial order relationship.

Consistent with embodiments of the present invention, a method to generate a service key in a key server is provided. The method includes following steps: constructing a rights hierarchy and a resource hierarchy; associating the rights hierarchy and the resource hierarchy; converting a rights-resource relationship into a node in a service hierarchy; and generating a service key for the node in the service hierarchy. The rights hierarchy includes a rights node and the resource hierarchy includes a resource node.

Consistent with embodiments of the present invention, a method to protect rights and contents delivered from a head-end device is provided. The method includes following steps: constructing a rights hierarchy and a resource hierarchy; associating the rights hierarchy and the resource hierarchy; converting a rights-resource relationship into a node in a service hierarchy; generating a service key for the node in the service hierarchy; encrypting the service key; and distributing the encrypted service key to a receiver. The rights hierarchy includes a rights node and the resource hierarchy includes a resource node.

The invention provides in one aspect a key management system, comprising: a key server for generating secret keys by constructing a rights hierarchy and a resource hierarchy, associating the rights hierarchy with the resource hierarchy, and converting a rights-resource relationship into a node in a service hierarchy, wherein the rights hierarchy comprises a rights node and the resource hierarchy comprises a resource node, and wherein the rights hierarchy is set above the resource hierarchy and right hierarchy and the resource hierarchy are in a partial order relationship.

Optionally, the rights node in the rights hierarchy is a first rights node at a first level, wherein the rights hierarchy further comprises a second rights node at a second level, wherein the first level is above the second level and the first rights node and the second rights node are in a partial order relationship.

Optionally, the resource node in the resource hierarchy is a first resource node at a third level, wherein the resource hierarchy further comprises a second resource node at a fourth level, wherein the third level is above the fourth level and the first resource node and the second resource node are in a partial order relationship.

Optionally, the node is a first node at a higher level, and wherein the service hierarchy further comprises a second node at a lower level, the first node and the second node being in a partial order relationship.

Optionally, the service hierarchy comprises a tree hierarchical structure.

Optionally, the key management system further comprises: a key receiver, wherein a plurality of secret keys are generated after the service hierarchy is established and are generated for each of the nodes in the service hierarchy, wherein the key receiver receives, from the key server, a first key of the first node in the service hierarchy, and wherein the key receiver derives a second key of the second node by computing the received first key.

Optionally, the key management system further comprises an operation server for receiving a plurality of subscriptions from a plurality of subscribers.

Optionally, the operation server associates one of the service subscribers with a node in the service hierarchy.

Optionally, the operation server groups the subscribers into one or more groups.

Optionally, the operation server associates one of the one or more groups with a node in the service hierarchy.

The invention provides in another aspect a method to generate a service key in a head-end device, the method comprising: constructing a rights hierarchy and a resource hierarchy, wherein the rights hierarchy comprises a rights node and the resource hierarchy comprises a resource node; associating the rights hierarchy and the resource hierarchy; converting a rights-resource relationship into a node in a service hierarchy; and generating a service key for the node in the service hierarchy.

Optionally, the rights hierarchy is set above the resource hierarchy and the right hierarchy and the resource hierarchy are in a partial order relationship.

Optionally, the rights node in the rights hierarchy is a first rights node at a first level, wherein the rights hierarchy further comprises a second rights node at a second level, wherein the first level is above the second level and the first rights node and the second rights node are in a partial order relationship.

Optionally, the resource node in the resource hierarchy is a first resource node at a third level, wherein the resource hierarchy further comprises a second resource node at a fourth level, wherein the third level is above the fourth level and the first resource node and the second resource node are in a partial order relationship.

Optionally, the method further comprises a step of generating a matrix adopting the nodes in the rights hierarchy and the nodes in the resource hierarchy.

Optionally, the node is a first node at a higher level, and wherein the service hierarchy further comprises a second node at a lower level, the first node and the second node being in a partial order relationship.

Optionally, the service hierarchy comprises a tree hierarchical structure.

Optionally, the method further comprises: receiving a plurality of subscriptions from a plurality of subscribers; and grouping the plurality of subscribers into one or more groups.

Optionally, the method further comprises: associating a first group of the one or more groups with the node in the service hierarchy; and distributing the service key to the first group.

In a further aspect, the invention provides a method to protect user rights and contents delivered from a head-end device, the method comprising: constructing a rights hierarchy and a resource hierarchy, wherein the rights hierarchy comprises a rights node and the resource hierarchy comprises a resource node; associating the rights hierarchy and the resource hierarchy; converting a rights-resource relationship into a node in a service hierarchy; generating a service key for the node in the service hierarchy; encrypting the service key; and distributing the encrypted service key to a receiver.

Optionally, the rights hierarchy is set above the resource hierarchy and the right hierarchy and the resource hierarchy are in a partial order relationship.

Optionally, the method further comprises: receiving a plurality of subscriptions from a plurality of subscribers; and grouping the plurality of subscribers into one or more groups.

Optionally, the method further comprises: associating a first group of the one or more groups with the node in the service hierarchy; and distributing the service key to the first group.

Optionally, the rights node in the rights hierarchy is a first rights node at a first level, wherein the rights hierarchy further comprises a second rights node at a second level, wherein the first level is above the second level and the first rights node and the second rights node are in a partial order relationship.

Optionally, the resource node in the resource hierarchy is a first resource node at a third level, wherein the resource hierarchy further comprises a second resource node at a fourth level, wherein the third level is above the fourth level and the first resource node and the second resource node are in a partial order relationship.

Optionally, the method further comprises a step of generating a matrix adopting the plurality of user rights and the plurality of resources.

Optionally, the node is a first node in a higher level, and wherein the service hierarchy further comprises a second node at a lower level, the first node and the second node being in a partial order relationship.

Optionally, the service hierarchy comprises a tree hierarchical structure.

Optionally, the service key is a first service key, the method further comprising: decrypting, at the receiver, the encrypted first service key; and deriving, at the receiver, a second service key for the second node from the first service key.

Optionally, the first node is a service package comprising a plurality of lower-level nodes.

Optionally, the method further comprises enforcing user rights over the contents through the derived second service key.

## BRIEF DESCRIPTION OF THE DRAWINGS

The accompanying drawings, which are incorporated in and constitute a part of this specification, illustrate embodiments of the invention and, together with the description, serve to explain features, advantages, and principles of the invention.

In the drawings,

Fig. 1 shows a rights-resource relationship matrix consistent with embodiments of the present invention;

Fig. 2a shows a rights hierarchy consistent with embodiments of the present invention;

Fig. 2b shows a resource hierarchy consistent with embodiments of the present invention;

Fig. 2c shows a rights-resource hierarchy consistent with embodiments of the present invention;

Fig. 3 shows a service hierarchy consistent with embodiments of the present invention;

Fig. 4 shows another service hierarchy consistent with embodiments of the present invention;

Fig. 5 shows a flow chart of a digital key management system consistent with embodiments of the present invention;

Fig. 6 shows a flow chart of procedures within a head-end device consistent with embodiments of the present invention;

Fig. 7 shows a flow chart of procedures within a receiver device consistent with embodiments of the present invention;

Fig. 8 shows a user grouping method consistent with embodiments of the present invention;

Fig. 9 shows another service hierarchy consistent with embodiments of the present invention;

Fig. 10 shows a user-service relationship matrix consistent with embodiments of the present invention;

Fig. 11 shows another user-service relationship matrix consistent with embodiments of the present invention; and

Fig. 12 shows another user-service relationship matrix consistent with embodiments of the present invention.

## DESCRIPTION OF THE EMBODIMENTS

Reference will now be made in detail to the present embodiments of the invention, examples of which are illustrated in the accompanying drawings.

Consistent with embodiments of the present invention, service hierarchies for a digital right key management system of a head-end device are provided. For a head-end device to manage a digital key system, there are at least three factors to be contemplated and manipulated: users, user rights, and resources. Any method to directly calculate a three-factor scheme would be complicated. Therefore, there is provided a multi-stage manipulation of these three factors. At one stage, a plurality of user rights is associated with a plurality of resources. A service hierarchy is established by constructing the plurality of user right and the plurality of resources. A key assignment scheme may be established based on the service hierarchy. At another stage, the user is allowed to subscribe to the services defined in the service hierarchy.

In an exemplary embodiment consistent with the present invention, a service hierarchy and the method for constructing the service hierarchy will be illustrated for a pay-TV scheme, but the service hierarchy and the method for constructing the service hierarchy is not limited to only the pay-TV scheme. A service hierarchy and the method for constructing the service hierarchy may also be used in many other applications such as digital TV, wireless communication, and various internet businesses.

In a pay-TV scheme, resources may be, for example, TV programs or channels. Users can subscribe, for example, to certain programs, to certain channels, to certain programs in a single channel, or to certain programs in multiple channels. For purposes of illustration, resources may be designated as a plurality of channels, for examples, channel 1 (resource 1, r1), channel 2 (resource 2, r2), channel 3 (resource 3, r3), channel 4 (resource 4, r4), channel 5 (resource 5, r5), etc. In addition, resources may be grouped together to be a resource package. For example, a resource package 1 (rp1) may include r1, r2, r3, and r4; and a resource package 2 (rp2) may include r3, r4, and r5. User rights may be, for example, rights to view (right 1, R1), rights to record (right2, R2), and/or rights to copy (right 3, R3) programs of the channels. The user rights may also be grouped together into a rights package. For example, a rights package 1 (RP1) may include R 1, R2, and R3.

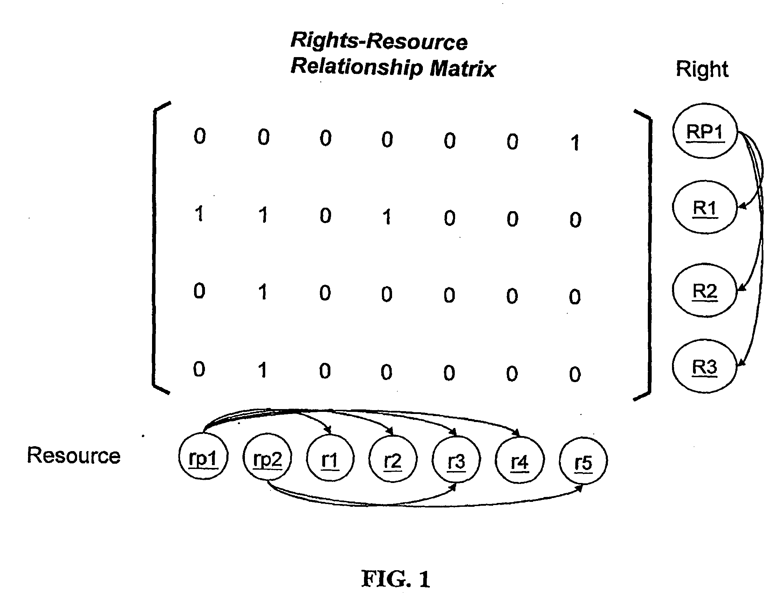

An exemplary relationship matrix constructed for a particular set of user rights and set of resources of the pay-TV scheme is shown in Fig. 1. "0" in the matrix means that for a user associated with the relationship matrix there is no right or rights package available to the corresponding resource or resource packages. On the other hand, "1" means that there is a right or rights package available to the corresponding resource or resource packages. In Fig. 1, R1 is available to rp1, rp2 and r2; R2 is available to rp2; R3 is available to rp2; RP1 is available to r5.

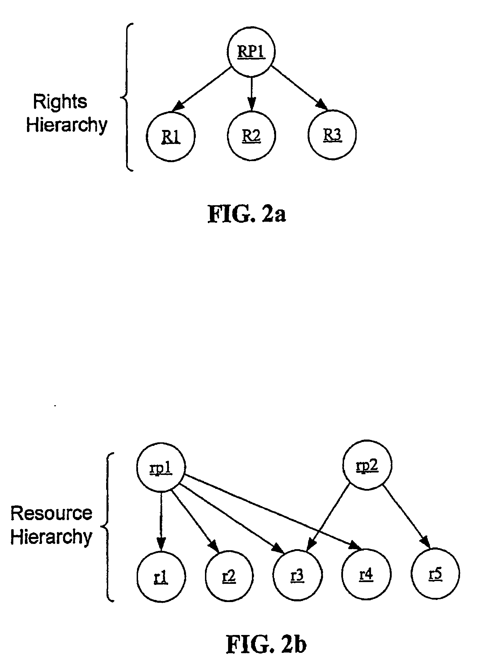

The user rights may be configured as a hierarchy. An example is shown in Fig. 2a, where R1, R2, and R3 are located at a lower level of a right hierarchy, and RP1 is located at an upper level. Each lower level node (R1, R2, or R3) may be linked to the upper level node (RP1) with a line which shows that each lower level node is a subordinate of the upper level node. The relationship between RP1 and R1 is described as a partial order ($R1 \subseteq RP1$). Similarly, a partial order relationship may exist between RP1 and R2 as $R2 \subseteq RP1$, or between RP1 and R3 as $R3 \subseteq RP1$. Note that the levels and nodes may be added in the hierarchy in accordance with actual applications. In certain embodiments, a rights hierarchy may only include a single node.

The resources may also be configured as a hierarchy. An example is shown in Fig. 2b, where r1, r2, r3, r4, and r5 are nodes of the hierarchy located at a lower level, and rp1 and rp2 are nodes of the hierarchy located at an upper level. Each of the lower level nodes, r1 to r4, is linked to the upper level node rp1 with an arrowed line which shows that each of the lower level nodes r1-r4 is a subordinate of the upper level node rp1. Each of the lower level nodes r3-r5 is linked to the upper level node rp2 with an arrowed line which shows that each of the lower level nodes is a subordinate of the upper level node rp2. The relationship between rp1 and r1 (or r2, r3, and r4) may be described as a partial order ($r1 \subseteq rp1$). Similarly, the relationship between rp2 and r3 (or r4 and r5) may be described as a partial order ($r3 \subseteq rp2$). Note that the levels and nodes may be added in the hierarchy in accordance with actual applications. In certain embodiments, a resource hierarchy may only include a single node.

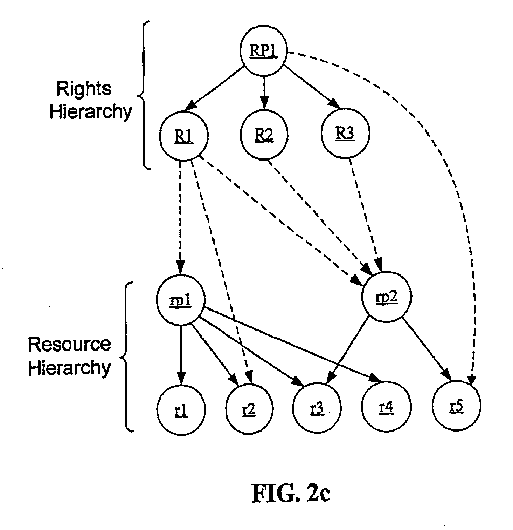

The construction of a service hierarchy will be explained below. In one stage, the rights hierarchy shown in Fig. 2a is associated with the resource hierarchy shown in Fig. 2b. An example of constructing a service hierarchy is shown in Fig. 2c where the rights hierarchy is set above the resource hierarchy and the rights hierarchy and the resource hierarchy are in a partial order relationship. According to the right-resource matrix discussed above, R1 is available to rp1, rp2, and r2; R2 is available to rp2; R3 is available to rp2; RP1 is available to r5. A line from R1 is assigned to connect R1 and rp1 to show that R1 is available to rp1; another line from R1 is assigned to connect R1 and r2 to show that R1 is available to r2; yet another line from R1 is assigned to connect R1 and rp2 to show that R1 is available to rp2. A line from R2 is assigned to connect R2 and rp2 to show that R2 is available to rp2. A line from R3 is assigned to connect R3 and rp2 to show that R3 is available to rp2. A line from RP1 is assigned to connect RP1 and r5 to show that RP1 is available to r5. The lines between the right hierarchy and the resource hierarchy mean "association." The functionality of Fig. 2c is equivalent to the matrix in Fig. 1.

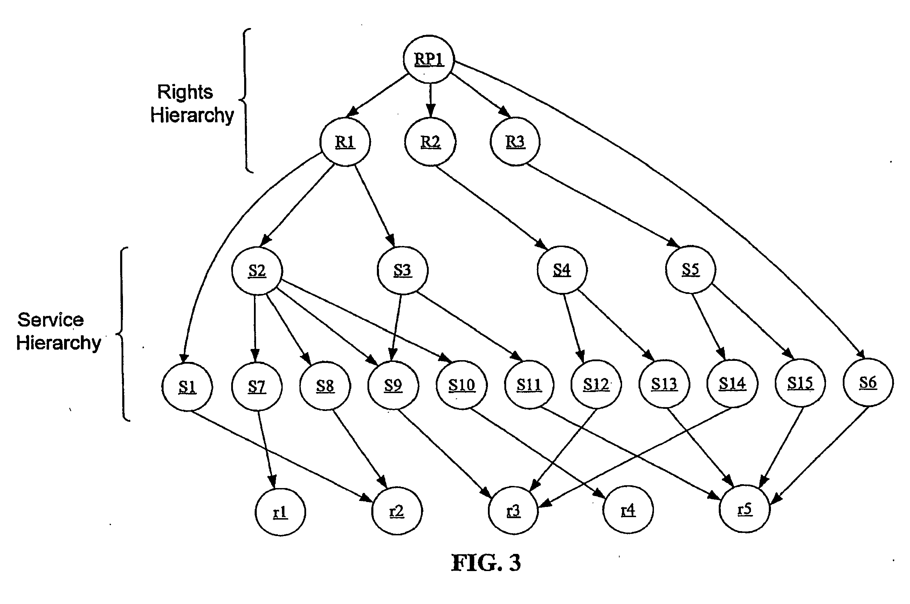

A right to use certain resources is defined as a "service." Therefore, each line segment in Fig. 2c connecting a node in the rights hierarchy and a node in the resource hierarchy defines a service. By adopting the definition of service, the right-resource hierarchy in Fig. 2c may be converted into a hierarchy as shown in Fig. 3. The service line segments (lines between rights and resources) in Fig. 2c are converted into S1, S2, S3, S4, S5, and S6 nodes in this hierarchy. Nodes S 1 and S6 are referred to as basic service elements as such nodes are each associated with a single resource. In the current example, S 1 is associated with r2 only and S6 is associated with r5 only. To further extend the service hierarchy, each of the nodes S2-S5 is associates with the lower-level resource nodes r1 to r5 via nodes S7, S8, S9, S10, S11, S12, S13, S 14 and S 15. Nodes S7 to S 15 are also referred to as basic service elements for that S7 is associated with r1, that S8 is associated with r2, that each of S9, S12, and S14 is associated with r3, that S 10 is associated with r4, and that each of S 11, S 13, and S 15 is associated with r5.

Each of nodes S2 to S5 may be referred to as a service package. For example, S2 is a service package including the basic service elements S7 to S10; S3 is a service package including the basic service elements S9 and S11; S4 is a service package including the basic service elements S12 and S 13; S5 is a service package including the basic service elements S 14 and S 15. A partial order relationship exists between a service package and a basic service element. For example, $S7 \subseteq S2$ means that S7 is of lower order than S2, and $S14 \subseteq S5$ means that S 14 is of lower order than S5. When a partial order relationship $X \subseteq Y$ stands, any subordinate under X is also a subordinate under Y. For example, in Fig. 3, node r1 is a subordinate under node S7 then node r1 is also a subordinate under node S2 since a partial order relationship takes place between nodes S2 and S7 as S7⊆S2.

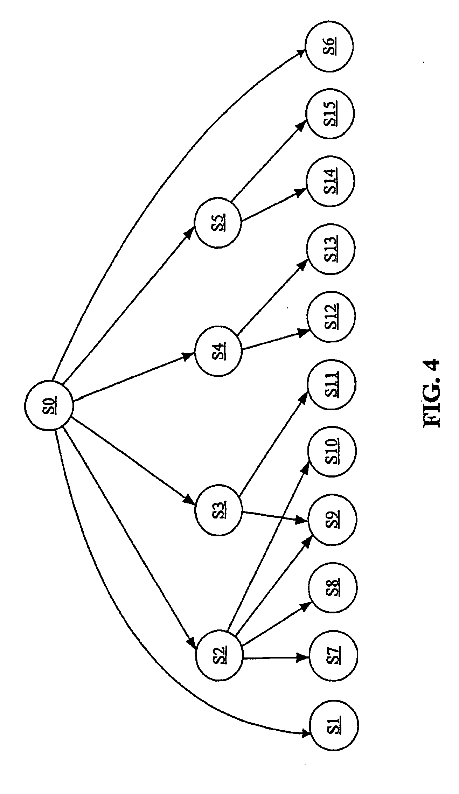

The hierarchical structure in Fig. 3 may be further simplified to contain only service nodes, as illustrated in Fig. 4. This may be achieved by removing the rights hierarchy from that in Fig. 3. For example, the RP1-R1-S1 linkage in Fig. 3 may be reduced to the S0-S1 linkage in Fig. 4. Similarly, the RP1-R3-S5 linkage in Fig. 3 may be reduced as the S0-S5 linkage in Fig. 4. After performing the reduction process, node S0 in Fig. 4 becomes a service package including service nodes S 1 to S6. A partial order relationship also applies in the service hierarchy in Fig. 4. For example, a partial order relationship exists between S2 and S0 as S2⊆S0. Any subordinate node under S2 should also be a subordinate under S0. The service hierarchy shown in Fig. 4 is a non-tree hierarchical structure. However, a service hierarchy may be constructed as a tree-type hierarchical structure.

The construction of a service hierarchy may be performed in a head-end device. The head-end device may include a key server for generating secret keys to increase information transmission security. For example, the key server may generate a secret key for each basic service element S1, S6 and S7 to S15 as shown in Fig. 4. If a user subscribes to services S7, S8, S9, and S10, the head-end device may transmit to the user four secret keys corresponding to services S7 to S10. Similarly, if a user subscribes to services S1, S6 and S7 to S15, the head-end device may transmit to the user eleven secret keys corresponding to services S1, S6 and S7 to S 15. As the number of users and services increases, the head-end device may be burdened by transmitting a large overhead of keys. The network transmission capability may be degraded by the overhead, and users may experience a slow system response. However, consistent with the embodiments of present invention, a key server in a head-end device may depend on the service hierarchy described above to generate secret keys for reducing overhead transmission.

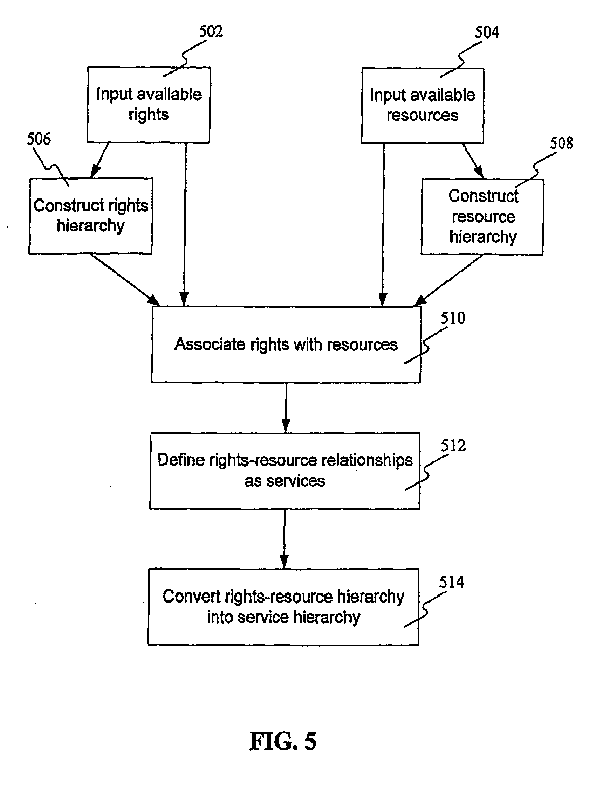

Consistent with embodiments of the present invention, a flow chart for describing construction of a service hierarchy from rights and resource is shown in Fig. 5. Both available rights and resources are input in a head-end device, respectively (stages 502 and 504). Following stage 502, the head-end device constructs a rights hierarchy based on the available rights (stage 506). The rights hierarchy may include one or more rights packages. However, if there is only one available right in the system, stage 506 may be omitted. The head-end device constructs a resource hierarchy based on the available resources (stage 508). The resource hierarchy may include a resource package. Similar to stage 506, if there is only one available resource, constructing a resource hierarchy at stage 508 may be omitted.

The head-end device associates the rights with the resources (stage 510). For example, the head-end device puts the right(s) or rights hierarchy constructed at stage 506 above the resource(s) or resource hierarchy and links each right to a resource or resource package. The head-end device defines rights-resource relationships as services (stage 512), and converts the linkage between each right and each resource or resource package to a service or a service package node for constructing a service hierarchy (stage 514).

After the service hierarchy as shown in Fig. 4 is constructed, partial order relationships between higher level nodes and lower level nodes are clarified, for example, S5⊆S0 and S15⊆S5. The partial order relationships can be adopted to generate and assign keys. Given any two service nodes Sn and Sm such that Sm $\underline{c}$ Sn, a receiver device upon receiving a secret key Kn for decrypting Sn may be able to use Kn to derive the secret key km for decrypting Sm. Therefore, the head-end device only has to transmit Kn instead of Km. It is clear that a head-end device adopting the service hierarchy consistent with embodiments of the present invention not only can reduce the overhead, but also can reduce the need to store key information in the head-end device and in the receiver device.

A key assignment scheme that permits a key receiver upon receiving a key to derive a second key has been proposed by J-C Birget et al., International Conference on Communications ICC 2001, Helsinki, Finland (June 2001) pp. 229 to 233. The scheme is described below. Let F[a, b] be a one-way function where the first variable "a" represents a encryption key and the second variable "b" represents an identity, and let $ID_j$ be the identity of node "j." Also, assign each node "i" a secret key $k_i$ randomly and independently. Define that

$$r_{ji} = F[k_i, ID_j] \oplus k_j, \quad \text{if } S_j \subseteq S_i, \quad \text{for service packages } S_j \text{ and } S_i \qquad \text{(Eq. 1)}$$

and that $r_{ij}$ is a random number otherwise.

Let $r_{ij}$, $ID_i$, $ID_j$, and F[a, b] be publicly known. If $S_j \subseteq S_m$, then a device authorized to use service package "m" can derive $k_j$ from the received $k_m$ by

$$k_j = F[k_m, ID_j] \oplus r_{jm}. \qquad \text{(Eq. 2)}$$

It will not be able to derive $k_j$ if the relationship $S_j \subseteq S_m$ does not hold.

When the key assignment scheme discussed above is applied in the service hierarchy as shown in Fig. 4, a head-end device may arbitrarily and independently assign a key for each node representing either a basic service element or a service package. Once the keys are assigned, the head-end device may need to publicize: (1) the identity code of every node in the hierarchy, (2) the segment value $r_{ji}$ between any two connected nodes i and j, and (3) the definition of a one-way function F[a, b].

Therefore, if there is a partial order relationship between any two nodes in a service hierarchy, a receiver device upon receiving a secret key for a node at an upper level in the service hierarchy would be able to derive the secret key of a node at a lower level in the service hierarchy using its own key. While a head-end device delivers overhead in the form of key data to individual users or user groups, the head-end device only has to transmit a secret key for a service package at a service hierarchy, which is the highest level the user or user group is entitled to, instead of transmitting each and every key for each basic service element. Keys for nodes at the lower level of the hierarchy would be derived accordingly and do not have to be delivered over the transmission channel. Therefore, bandwidth to transmit overhead and storage space for secret key information may greatly be reduced.

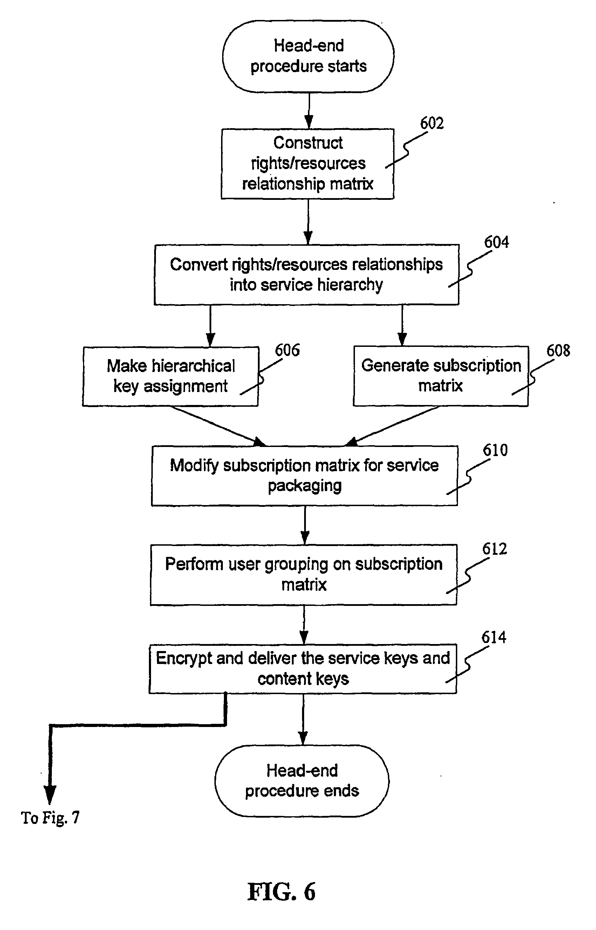

Consistent with embodiments of the present invention, an exemplary operation procedure of a digital right management system used in a head-end device will be described below. A flow chart consistent with the operation procedure is shown in Fig. 6. A head-end device constructs a matrix including user rights and resources (stage 602). An example of such a matrix is described in Fig. 1 and relevant description. After the construction of a right-resource matrix, the matrix is converted into a service hierarchy (stage 604). Examples of conversion processes are described in Fig. 2 to Fig. 5 and the relevant descriptions. The service hierarchy includes a plurality of basic service elements and at least one service package. A partial order relationship holds in a service hierarchy among basic service elements and service packages. Based on the service hierarchy constructed in stage 604, a key server in the head-end device can generate and assign keys to each node of the service hierarchy (stage 606).

Also, the head-end device generates a user subscription matrix which includes user's subscription and basic service element (stage 608) which is defined at stage 604. An operation server may be included in the head-end device to receive subscriptions from system users. The operation server may further function to associate the subscriptions with the basic service elements. Next, the user subscription matrix may be modified based on the service packages defined in the service hierarchy at stage 604 (stage 610). In addition to associating basic service elements, the user's subscription can associate with service packages, so that the head-end device could reduce transmission overhead by sending service package keys to a receiver device instead of sending every basic service element key. The operation server in the head-end device groups the users into one or more groups in accordance with the subscription matrix (stage 612).

Following the grouping of users, the head-end device encrypts service and content keys, and delivers them to authorized receiver devices (stage 614). The service key may be a key for a basic service element or a key for a service package. The head-end device may encrypt the service key and encrypt the contents by the service key.

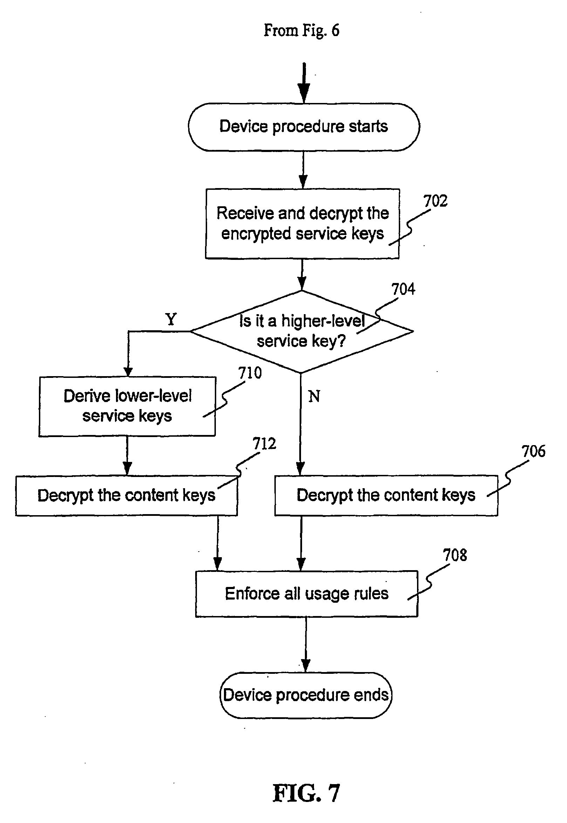

Figure 7 depicts an exemplary operation procedure of the receiver device. The receiver device receives and decrypts the service keys (stage 702) sent out by the head-end device. The receiver device determines whether the service key is a higher-level key in the service hierarchy (stage 704) or a basic service key. If the service key is a basic service key, it may immediately be used by the receiver device to decrypt the corresponding encrypted content key (stage 706). The content key, in turn, can be used to decrypt the corresponding encrypted contents. This, therefore, allows the receiver device to enforce its rights for using allowable resources (stage 708). If the receiver device received a higher-level service key at stage 702, the receiver device may need to use the higher-level service key to derive lower-level service keys, down to keys for basic service elements (stage 710). The receiver device then decrypts the content keys by using the basic service keys obtained at stage 710 (stage 712).

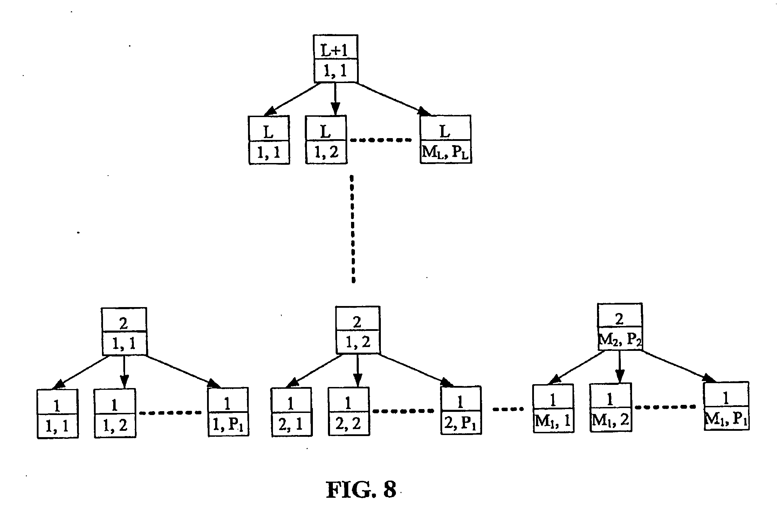

A user grouping method is illustrated in Fig. 8. Assuming the user number to be grouped is N, these N users would be divided into $M_1$ ($M_1 \geq 1$) groups with each group having $P_1$ users therein. $M_1$ groups are defined as "first layer groups." By combining a plurality of first layer groups, it is possible to form second layer groups $M_2$. The group procedure can continue until the grouping converges to the L+1 layer as shown in Fig. 8. The hierarchical structure of the user group method may be a binary tree or a non-binary tree. Although the more layers in the user hierarchical structure the less overhead the head-end device transmits, the first layer grouping may be sufficient to let the head-end device significantly reduce transmission overhead.

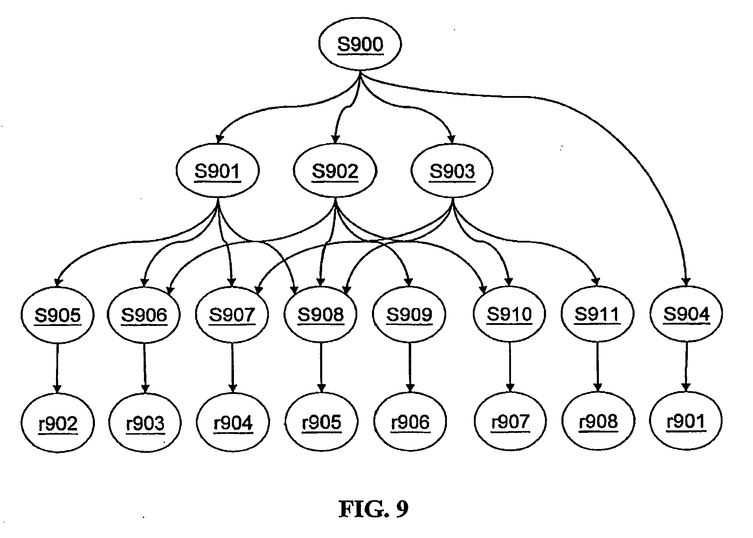

The operation procedures in a head-end device as described above can be further explained using an example as shown in Figure 9. Blocks S900, S901, S902, and S903 are service packages, while S904, S905, S906, S907, S908, S909, S910, and S911 are basic service elements. Service package S900 includes service packages 901 to 903 and basic service element 904. Service package S901 includes basic service elements S905 to S908. Service package S902 includes basic service elements S906 and S908 to S910. Service package S903 includes basic service elements S909, S908, S910, and S911. All arrowed lines between service elements in Figure 9 represent partial order relationship. Each of the basic service elements S904 to S911 associates with a resource in r901 to r908, respectively. When a key server in the head-end device assigns a key to S900, this key would be used to derive keys for S901 to S904. Further, the key assigned to service package S901 would be used to derive keys for basic service elements S905 to S908.

Similarly, the key assigned to service package S902 would be used to derive keys for basic service elements S906 and S908 to S910, and the key assigned to service package S903 would be used to derive keys for basic service elements S907, S908, S910, and S911.

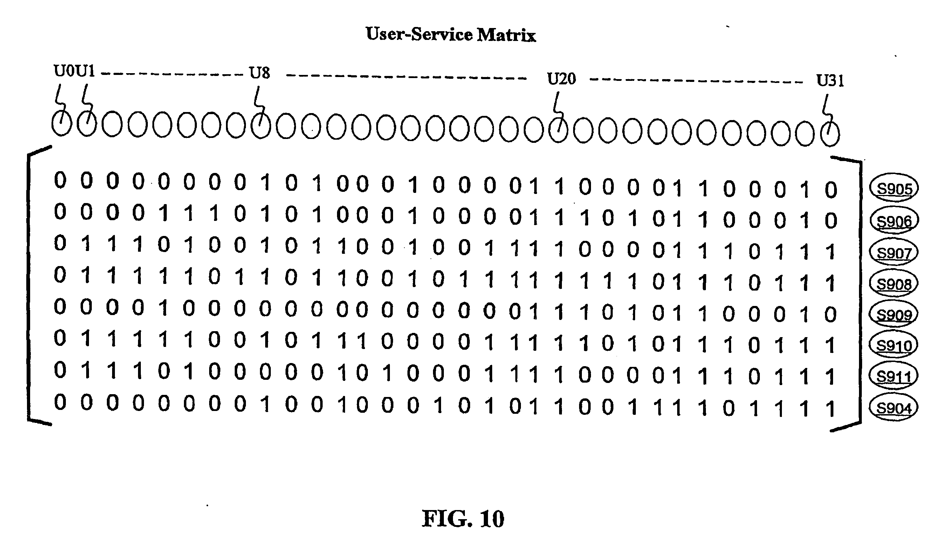

Consistent with stage 604 shown in Fig. 6, a user subscription matrix is constructed by available basic service elements S904 to S911 as shown in Fig. 10. In this example, the user number is set to be thirty two. This number is selected for convenience of illustration and should not be taken as a limitation. Entries with value "1" in the matrix indicate that a user subscribes to a corresponding service. For example, the ninth entry in the first row of the matrix in Fig. 10 has value "1" to indicate that the ninth user U8 subscribes to a basic service element S905. On the other hand, an entry with value "0" in the matrix indicates that a user does not subscribe to a corresponding service. For any user subscribing to a service, as indicated by an "1" in the matrix, the head-end device will send a service key to that user's receiver devices to authorize the decryption and consumption of the corresponding resources. In the matrix in Fig. 10, the number of entries with value "1" is 120, indicating that 120 service keys need to be delivered. Therefore, the transmission overhead from the head-end device is 120.

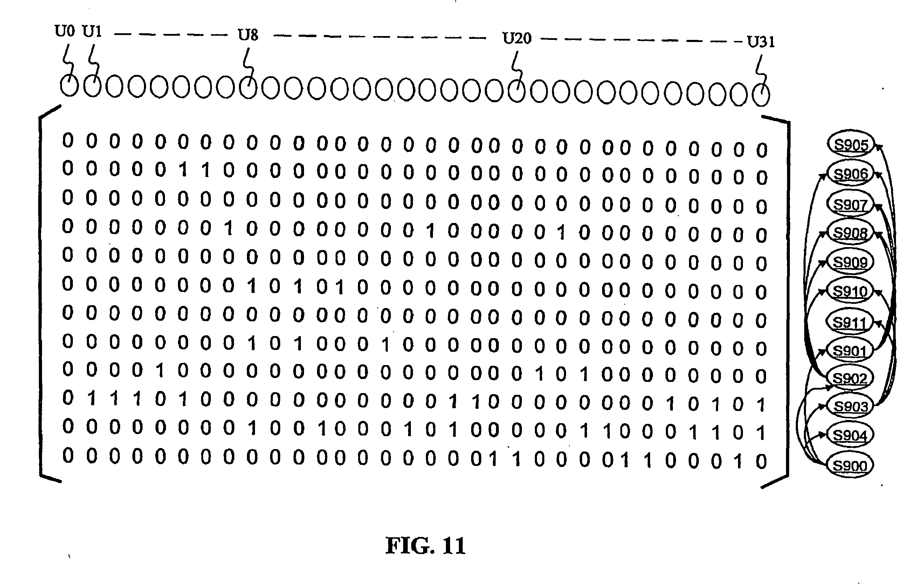

Referring to a matrix shown in Fig. 11, service packages S900 to S903 defined in Fig. 9 are introduced in the matrix and accordingly reduce the transmission overhead. According to the service hierarchy shown in Fig. 9, if a user subscribes to all of the basic service elements S904 to S911, this user can be regarded as subscribing to service package S900. This is exemplified by user U20 in Fig. 10. For user U20 alone, since it subscribes to basic service elements S904 to S911, the head-end device would need to send 8 transmission overheads. However, as the subscription of these basic service elements is equivalent to the subscription of service package S900, the transmission overhead can be reduced to only one as illustrated in Fig. 11 where all entries, except the last one, in the column under user U20 in Fig. 11 are "0". By introducing service packages, the total number of transmission overhead reduces from 120 as in Fig. 10 to 35 as in Fig. 11.

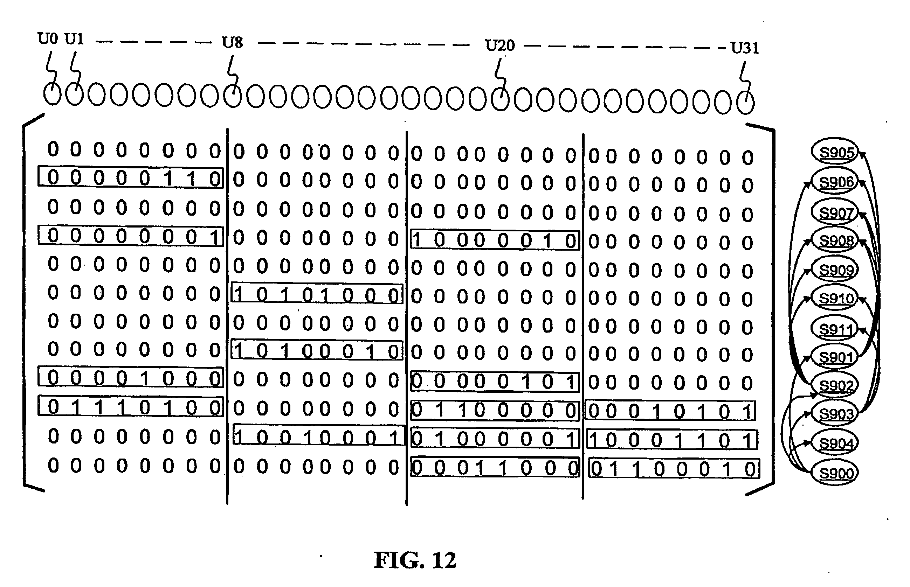

Transmission overhead may be further reduced by the adoption of user grouping methods. An example is shown in Fig. 12. The matrix in Fig. 12 is created from the matrix in Fig. 10, and a user grouping method is applied therein. For example, users U0 to U31 are grouped into four groups with U0 to U7 being a first group, U8 to U15 being a second group, U16 to U23 being a third group, and U24 to U31 being a fourth group. If there is at least an entry of "1" appearing within a group, the head-end device may send out a service key associated to the corresponding service(s) which might be a basic service element or a service package. If all entries in a group have value "0," the head-end device may not need to send out any service key. For example, as the uppermost row in the first group (U0 to U7) in Fig. 11 is filled with 0's, the head-end device does not need to send out a service key for service S905. The second row of the same group includes 2 entries of "1," and the head-end device sends a service key for service S906 to this user group. Therefore, as can be seen in Fig. 12, the amount of transmission overhead can further be reduced from 35 as in Fig. 11 to 15.

It will be apparent to those skilled in the art that various modifications and variations can be made in the disclosed methods and procedures without departing from the scope or spirit of the invention. Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

**Claims**

1. A key management system, comprising:

    a key server for generating secret keys by constructing a rights hierarchy and a resource hierarchy, associating the rights hierarchy with the resource hierarchy, and converting a rights-resource relationship into a node in a service hierarchy,

    wherein the rights hierarchy comprises a rights node and the resource hierarchy comprises a resource node, and wherein the rights hierarchy is set above the resource hierarchy and the right hierarchy and the resource hierarchy are in a partial order relationship.

2. The key management system of claim 1, wherein the rights node in the rights hierarchy is a first rights node at a first level, wherein the rights hierarchy further comprises a second rights node at a second level, wherein the first level is above the second level and the first rights node and the second rights node are in a partial order relationship.

3. The key management system of claim 1 or 2, wherein the resource node in the resource hierarchy is a first resource node at a third level, wherein the resource hierarchy further comprises a second resource node at a fourth level, wherein the third level is above the fourth level and the first resource node and the second resource node are in a partial order relationship.

4. The key management system of claim 1, 2 or 3, wherein the node is a first node at a higher level, and wherein the service hierarchy further comprises a second node at a lower level, the first node and the second node being in a partial order relationship;
optionally:

wherein the service hierarchy comprises a tree hierarchical structure;

wherein optionally:

said management system further comprises: a key receiver,

wherein a plurality of secret keys are generated after the service hierarchy is established and are generated for each of the nodes in the service hierarchy,
wherein the key receiver receives, from the key server, a first key of the first node in the service hierarchy, and
wherein the key receiver derives a second key of the second node by computing the received first key.

5. The key management system of any one of the preceding claims, further comprising an operation server for receiving a plurality of subscriptions from a plurality of subscribers;
optionally:

wherein the operation server associates one of the service subscribers with a node in the service hierarchy;

and/or optionally:
wherein the operation server groups the subscribers into one or more groups; and/or optionally:
wherein the operation server associates one of the one or more groups with a node in the service hierarchy.

6. A method to generate a service key in a head-end device, the method comprising:

constructing a rights hierarchy and a resource hierarchy, wherein the rights hierarchy comprises a rights node and the resource hierarchy comprises a resource node;
associating the rights hierarchy and the resource hierarchy;
converting a rights-resource relationship into a node in a service hierarchy; and
generating a service key for the node in the service hierarchy.

7. A method to protect user rights and contents delivered from a head-end device, the method comprising:

constructing a rights hierarchy and a resource hierarchy, wherein the rights hierarchy comprises a rights node and the resource hierarchy comprises a resource node;
associating the rights hierarchy and the resource hierarchy;
converting a rights-resource relationship into a node in a service hierarchy;
generating a service key for the node in the service hierarchy;
encrypting the service key; and
distributing the encrypted service key to a receiver.

8. The method of claim 6 or 7, wherein the rights hierarchy is set above the resource hierarchy and the right hierarchy and the resource hierarchy are in a partial order relationship.

9. The method of claim 6, 7 or 8, further comprising:

receiving a plurality of subscriptions from a plurality of subscribers; and
grouping the plurality of subscribers into one or more groups;
said method optionally further comprising:

associating a first group of the one or more groups with the node in the service hierarchy; and
distributing the service key to the first group.

10. The method of any one of claims 6 to 9; wherein the rights node in the rights hierarchy is a first rights node at a first level, wherein the rights hierarchy further comprises a second rights node at a second level, wherein the first level is above the second level and the first rights node and the second rights node are in a partial order relationship; optionally:

wherein the resource node in the resource hierarchy is a first resource node at a third level, wherein the resource hierarchy further comprises a second resource node at a fourth level, wherein the third level is above the fourth level and the first resource node and the second resource node are in a partial order relationship.

11. The method of claim 10, further comprising a step of generating a matrix adopting the plurality of user rights and the plurality of resources; and/or further comprising a step of generating a matrix adopting the nodes in the rights hierarchy and the nodes in the resource hierarchy.

12. The method of any one of claims 6 to 11, wherein the node is a first node in a higher level, and wherein the service hierarchy further comprises a second node at a lower level, the first node and the second node being in a partial order relationship; optionally:

wherein the service hierarchy comprises a tree hierarchical structure.

13. The method of claim 12, wherein the first node is a service package comprising a plurality of lower-level nodes.

14. The method of any one of claims 6 to 13, wherein the service key is a first service key, the method further comprising:

decrypting, at the receiver, the encrypted first service key; and deriving, at the receiver, a second service key for the second node from the first service key.

15. The method of claim 14, further comprising enforcing user rights over the contents through the derived second service key.

## Rights-Resource Relationship Matrix

$$\begin{bmatrix} 0 & 0 & 0 & 0 & 0 & 0 & 1 \\ 1 & 1 & 0 & 1 & 0 & 0 & 0 \\ 0 & 1 & 0 & 0 & 0 & 0 & 0 \\ 0 & 1 & 0 & 0 & 0 & 0 & 0 \end{bmatrix}$$

**Right**

RP1

R1

R2

R3

Resource

rp1  rp2  r1  r2  r3  r4  r5

**FIG. 1**

EP 2 160 028 A2

Rights
Hierarchy

**FIG. 2a**

Resource
Hierarchy

**FIG. 2b**

Rights
Hierarchy

Resource
Hierarchy

**FIG. 2c**

FIG. 3

**FIG. 4**

502

Input available
rights

504

Input available
resources

506

Construct rights
hierarchy

508

Construct
resource
hierarchy

Associate rights with resources

510

Define rights-resource relationships
as services

512

Convert rights-resource hierarchy
into service hierarchy

514

**FIG. 5**

Head-end
procedure starts

Construct
rights/resources
relationship matrix                    602

Convert rights/resources relationships
into service hierarchy                  604

Make hierarchical
key assignment          606

Generate subscription
matrix                    608

Modify subscription matrix for service
packaging                              610

Perform user grouping on subscription
matrix                                 612

Encrypt and deliver the service keys and
content keys                            614

Head-end
procedure ends

To Fig. 7

**FIG. 6**

From Fig. 6

```
              Device procedure starts

            Receive and decrypt the        702
              encrypted service keys

                                      704
        Y         Is it a higher-level
                      service key?

                                   N
      Derive lower-level    710
        service keys

                        712                                706
   Decrypt the content keys          Decrypt the content keys

                                                          708
              Enforce all usage rules

              Device procedure ends
```

**FIG. 7**

**FIG. 8**

FIG. 9

User-Service Matrix

FIG. 10

EP 2 160 028 A2

U0 U1 — — — — — U8 — — — — — — — U20 — — — — — — — U31

0 0 0 0 0 0 0 0 0 0 0 0 0 0 0 0 0 0 0 0 0 0 0 0 0 0 0 0 0 0 0 0
0 0 0 0 0 1 1 0 0 0 0 0 0 0 0 0 0 0 0 0 0 0 0 0 0 0 0 0 0 0 0 0
0 0 0 0 0 0 0 0 0 0 0 0 0 0 0 0 0 0 0 0 0 0 0 0 0 0 0 0 0 0 0 0
0 0 0 0 0 0 1 0 0 0 0 0 0 0 1 0 0 0 0 0 1 0 0 0 0 0 0 0 0 0 0 0
0 0 0 0 0 0 0 0 0 0 0 0 0 0 0 0 0 0 0 0 0 0 0 0 0 0 0 0 0 0 0 0
0 0 0 0 0 0 0 1 0 1 0 1 0 0 0 0 0 0 0 0 0 0 0 0 0 0 0 0 0 0 0 0
0 0 0 0 0 0 0 0 0 0 0 0 0 0 0 0 0 0 0 0 0 0 0 0 0 0 0 0 0 0 0 0
0 0 0 0 0 0 0 1 0 1 0 0 1 0 0 0 0 0 0 0 0 0 0 0 0 0 0 0 0 0 0 0
0 0 0 1 0 0 0 0 0 0 0 0 0 0 0 0 0 0 1 0 1 0 0 0 0 0 0 0 0 0 0 0
0 1 1 1 0 1 0 0 0 0 0 0 0 0 0 1 1 0 0 0 0 0 0 0 0 1 0 1 0 1 0 1
0 0 0 0 0 0 0 1 0 0 1 0 0 0 1 0 1 0 0 0 0 0 1 1 0 0 0 1 1 0 1
0 0 0 0 0 0 0 0 0 0 0 0 0 0 0 0 0 0 1 1 0 0 0 0 1 1 0 0 0 1 0

S905
S906
S907
S908
S909
S910
S911
S901
S902
S903
S904
S900

**FIG. 11**

EP 2 160 028 A2

EP 2 160 028 A2

U0 U1 ——————— U8 ——————————— U20 —————————— U31

| | | | |
|---|---|---|---|
| 0 0 0 0 0 0 0 0 | 0 0 0 0 0 0 0 0 | 0 0 0 0 0 0 0 0 | 0 0 0 0 0 0 0 0 |
| 0 0 0 0 0 1 1 0 | 0 0 0 0 0 0 0 0 | 0 0 0 0 0 0 0 0 | 0 0 0 0 0 0 0 0 |
| 0 0 0 0 0 0 0 0 | 0 0 0 0 0 0 0 0 | 0 0 0 0 0 0 0 0 | 0 0 0 0 0 0 0 0 |
| 0 0 0 0 0 0 0 1 | 0 0 0 0 0 0 0 0 | 1 0 0 0 0 0 1 0 | 0 0 0 0 0 0 0 0 |
| 0 0 0 0 0 0 0 0 | 0 0 0 0 0 0 0 0 | 0 0 0 0 0 0 0 0 | 0 0 0 0 0 0 0 0 |
| 0 0 0 0 0 0 0 0 | 1 0 1 0 1 0 0 0 | 0 0 0 0 0 0 0 0 | 0 0 0 0 0 0 0 0 |
| 0 0 0 0 0 0 0 0 | 0 0 0 0 0 0 0 0 | 0 0 0 0 0 0 0 0 | 0 0 0 0 0 0 0 0 |
| 0 0 0 0 0 0 0 0 | 1 0 1 0 0 0 1 0 | 0 0 0 0 0 0 0 0 | 0 0 0 0 0 0 0 0 |
| 0 0 0 0 1 0 0 0 | 0 0 0 0 0 0 0 0 | 0 0 0 0 0 1 0 1 | 0 0 0 0 0 0 0 0 |
| 0 1 1 0 1 0 0 | 0 0 0 0 0 0 0 0 | 0 1 1 0 0 0 0 0 | 0 0 0 1 0 1 0 1 |
| 0 0 0 0 0 0 0 0 | 1 0 0 1 0 0 0 1 | 0 1 0 0 0 0 0 1 | 1 0 0 0 1 1 0 1 |
| 0 0 0 0 0 0 0 0 | 0 0 0 0 0 0 0 0 | 0 0 0 1 1 0 0 0 | 0 1 1 0 0 0 1 0 |

S905
S906
S907
S908
S909
S910
S911
S901
S902
S903
S904
S900

**FIG. 12**

**EP 2 160 028 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J-C Birget et al.** *International Conference on Communications ICC 2001,* June 2001, 229-233